# EUROPEAN PATENT APPLICATION

(11) **EP 2 466 736 A1**
(43) Date of publication of application: **20.06.2012**
(21) Application number: 11184581.4
(22) Date of filing: 11.10.2011
(51) Int. Cl.: H02M 1/34

(54) **Power supply unit and an information processing apparatus**

(30) Priority: 17.12.2010 JP 2010282425
(71) Applicant: Fujitsu Limited, Kawasaki-shi, Kanagawa 211-8588 (JP)
(72) Inventor: Sugawara, Takahiko, Kawasaki-shi, Kanagawa 211-8588 (JP)
(74) Representative: Fenlon, Christine Lesley

(57) **Abstract**

A power supply unit includes input terminals to which alternating current power is supplied, a rectifier circuit configured to rectify the alternating current power supplied from the input terminals, a capacitor configured to smooth the alternating current power rectified by the rectifier circuit, a primary transformer winding and a switching element connected in series between first and second terminals of the capacitor, a secondary transformer winding coupled to the primary transformer winding, output terminals connected to the secondary transformer winding, and a snubber circuit connected parallel to the switching element. The snubber circuit includes a parallel circuit having a first capacitor and a second capacitor connected in parallel, and a resistor connected in series with the parallel circuit.

## Description

### FIELD

The disclosures herein relate to a power supply unit and an information processing apparatus.

### BACKGROUND

There is a snubber circuit known in the art. Such a snubber circuit generally includes a series circuit including a snubber diode connected parallel to a gate turn-off thyristor (GTO) and a snubber resistor connected parallel to the snubber diode. The snubber circuit includes the series circuit having a semiconductor switching element connected parallel to a first snubber capacitor, a second snubber capacitor, a discharging resistor connected parallel to the second snubber capacitor, and a switching unit configured to turn on the semiconductor element on when a GTO current reaches a predetermined value or above.

In addition, there is disclosed a semiconductor switch gate drive circuit connected to a snubber circuit that is connected parallel to a GTO. This snubber circuit includes a series circuit having a snubber diode and a snubber capacitor, and a snubber resistor connected in parallel with the snubber diode of the series circuit. The semiconductor switch gate drive circuit is connected between the a capacitor series member connected parallel to the snubber capacitor within the snubber circuit, a drive circuit connected between a gate terminal and a cathode terminal of the GTO and configured to activate switching operations of the GTO, a collecting circuit configured to collect energy from the capacitor series member, and an accumulation capacitor configured to accumulate the energy collected from the collecting circuit. The accumulation capacitor is utilized as a power supply for the drive circuit that switches on or off of the GTO.

In the snubber circuit including the semiconductor switching element connected parallel to the first snubber capacitor, since the snubber circuit includes the snubber diode, the snubber resistor, the semiconductor switching element, a second snubber capacitor, and the discharging resistor, high power consumption (power loss) may be required for the overall circuit due to numerous circuit components contained in the snubber circuit. Specifically, since the snubber circuit includes two resistors, namely, the snubber resistor and the discharging resistor, the snubber circuit may need high power consumption. Accordingly, the snubber circuit is not suitable for a power supply unit for supplying power to a load device. In addition, since the switching unit for controlling switching on or off of the semiconductor-switching element is additionally required in the snubber circuit, the snubber circuit includes a complicated circuit configuration.

Moreover, a circuit in which a semiconductor switch gate drive circuit is connected to the snubber circuit. Since the disclosed circuit includes numerous circuit components such as the snubber diode, the snubber resistor, the semiconductor switching element, a second snubber capacitor, and the discharging resistor, high power consumption (power loss) may also be required for the overall circuit. Moreover, in the circuit configuration, since part of the snubber circuit is utilized as a power supply for the drive circuit of the GTO, the disclosed circuit configuration may not be provided with any techniques to sufficiently lower surge voltage. This indicates that the surge voltage may not be effectively reduced in the disclosed circuit configuration. Accordingly, the disclosed circuit may not be suitable for use in a power supply unit for supplying power to the load device.
[Patent Document 1] Japanese Utility Model Registration Application Laid-Open Publication No. 05-048583
[Patent Document 2] Japanese Laid-Open Patent Application No. 08-051770

### SUMMARY

Accordingly, it is desirable to provide a power supply unit and an information processing apparatus capable of reducing a surge voltage.

According to an aspect of an embodiment, a power supply unit includes input terminals to which alternating current power is supplied; a rectifier circuit configured to rectify the alternating current power supplied from the input terminals; a capacitor configured to smooth the alternating current power rectified by the rectifier circuit; a primary transformer winding and a switching element connected in series between first and second terminals of the capacitor; a secondary transformer winding coupled to the primary transformer winding; output terminals connected to the secondary transformer winding; and a snubber circuit connected parallel to the switching element. The snubber circuit includes a parallel circuit having a first capacitor and a second capacitor connected in parallel, and a resistor connected in series with the parallel circuit.

The object and advantages of the invention will be realized and attained by means of the elements and combinations particularly pointed out in the appended claims.

### BRIEF DESCRIPTION OF THE DRAWINGS

FIG. 1 is a diagram illustrating a comparative example of a power supply unit;
FIG. 2A is a graph illustrating a simulation result of a drain voltage of a switching element in the comparative example of the power supply unit, and FIG. 2B is a graph illustrating a simulation result of power consumption of the switching element in the comparative example of the power supply unit;
FIG. 3 is a block diagram illustrating an information FIG. 3 is a block diagram illustrating an information processing apparatus including a power supply unit according to an embodiment;
FIG. 4 is a circuit diagram illustrating the power supply unit according to the embodiment;
FIG. 5A is a graph illustrating a simulation result of a drain voltage of a switching element in the power supply unit according to the embodiment, and FIG. 5B is a graph illustrating a simulation result of power consumption of the switching element in the power supply unit according to the embodiment;
FIG. 6 is a characteristic graph illustrating simulation results of the surge voltage and power consumption of the power supply unit according to the embodiment and those of the comparative example of the power supply unit; and
FIG. 7 is a plan diagram illustrating modification of the power supply unit according to the embodiment on which a switching element, a first snubber capacitor, a snubber resistor and a second snubber capacitor are
implemented.

### DESCRIPTION OF EMBODIMENTS

A description is given, with reference to the accompanying drawings, of embodiments of a power supply unit and an information processing apparatus.

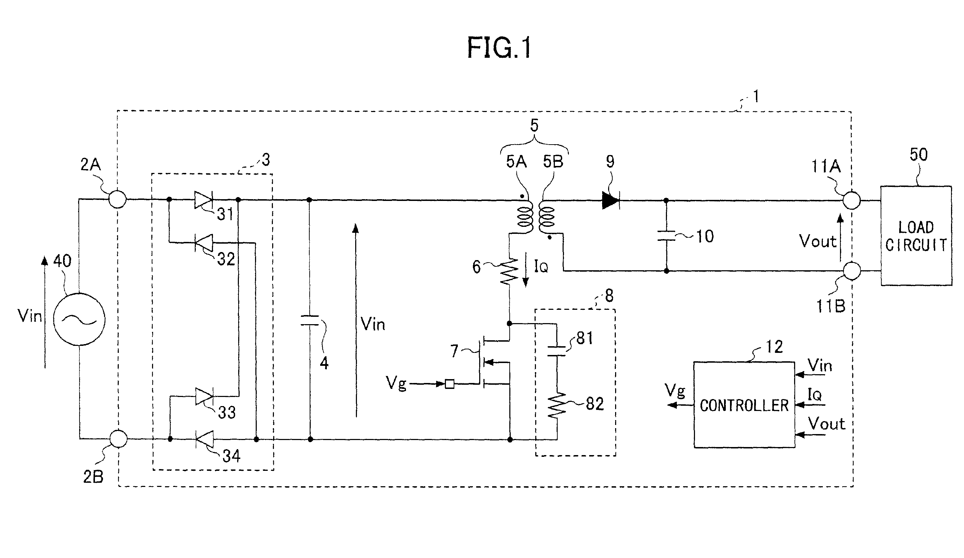

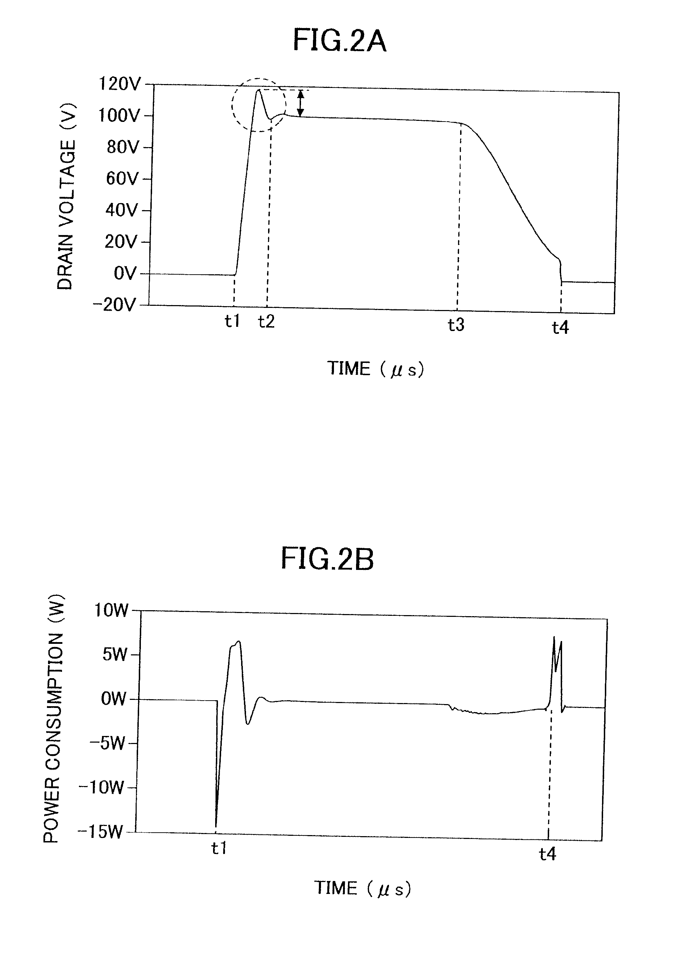

Prior to illustration of the embodiments of the power supply unit and the information processing apparatus, a comparative example of a power supply unit is described first with reference to FIG. 1 and FIGS. 2A and 2B.

FIG. 1 is a diagram illustrating the comparative example of the power supply unit.

The comparative example of the power supply unit 1 includes input terminals 2A and 2B, a rectifier circuit 3, a first smoothing capacitor 4, a transformer 5, a primary transformer winding 5A and a secondary transformer winding 5B, a current detector 6, a switching element 7, a snubber circuit 8, a diode 9, a second smoothing capacitor 10, output terminals 11A and 11B, and a controller 12.

In the comparative example of the power supply unit 1, the input terminals 2A and 2B are connected with an alternating-current power supply (AC power supply) 40 such that the alternating-current power supply 40 supplies AC power to the input terminals 2A and 2B. The AC power supplied from the AC power supply 40 via the input terminals 2A and 2B to the comparative example of the power supply unit 1 is further supplied to the rectifier circuit 3. Note that an output voltage of the AC power supply 40 is defined to have an effective value Vin.

The rectifier circuit 3 is a diode bridge circuit that is formed of four diodes 31, 32, 33 and 34 in a bridge circuit configuration. The rectifier circuit 3 is configured to convert the whole of the input waveform of the AC power into one of constant polarity (positive or negative) at its output (full-wave rectification).

The first smoothing capacitor 4 is configured to smooth the full-wave rectified AC power of the rectifier circuit 3. The voltage between the terminals of the first smoothing capacitor 4 is a direct current (DC) voltage Vin.

The primary transformer winding 5A, the current detector 6 and the switching element 7 are connected in this order in series between the terminals of the first smoothing capacitor 4. Note that a lower one of the terminals of the first smoothing capacitor 4 illustrated in FIG. 1 may be grounded.

The primary transformer winding 5A and the secondary transformer winding 5B are coupled. The primary transformer winding 5A and the secondary transformer winding 5B are respectively serving as an input side coil and an output side coil of the transformer 5.

The current detector 6 is a current detective resistor configured to detect the current flowing between a drain and a source of the switching element 7. The current IQ detected by the current detector 6 is supplied to the controller 12.

The switching element 7 may preferably be formed of a metal oxide semiconductor field-effect transistor (MOSFET) . When the controller 12 applies a pulse of a gate voltage Vg to the switching element 7, the switching element 7 is turned on or off by pulse width modulation (PWM) driving of the switching element 7. Note that if the MOSFET is utilized as the switching element 7, the drain of the switching element 7 may be connected to the primary transformer winding 5A and the source of the switching element 7 may be grounded.

The snubber circuit 8 includes a snubber capacitor 81 and a snubber resistor 82. The snubber circuit 8 having the snubber capacitor 81 and the snubber resistor 82 is connected between the drain and the source of the switching element 7. The snubber capacitor 81 and the snubber resistor 82 are connected in series.

The secondary transformer winding 5B is coupled to the primary transformer winding 5A. The secondary transformer winding 5B is situated on the output side of the transformer 5. The secondary transformer winding 5B is configured to output a voltage relative to a turns ratio with the primary transformer winding 5A.

The diode 9 is connected between the secondary transformer winding 5B and the output terminal 11A. The diode 9 is one example of a rectifier element configured to rectify the power output from the secondary transformer winding 5B. Examples of the diode 9 include a fast recovery diode and a SiC-based Schottky barrier diode.

The smoothing capacitor 10 is connected between the output terminals 11A and 11B. The smoothing capacitor 10 is configured to smooth the power rectified by the diode 9.

The output terminals 11A and 11B are configured to output DC power. The DC power is obtained by allowing the diode 9 to rectify the power output from the secondary transformer winding 5B, and then allowing the smoothing capacitor 10 to smooth the power rectified by the diode 9. The output terminal 11B includes a potential lower than the potential of the output terminal 11A. The voltage (DC voltage) between the output terminals 11A and 11B is defined to have an output voltage Vout. The output voltage Vout is applied to the controller 12. The output terminal 11B may be grounded.

The controller 12 is configured to generate the gate voltage Vg that will be applied to the gate of the switching element 7. The controller 12 is also configured to determine the duty ratio of the gate voltage Vg based on the voltage Vin between the terminals of the first smoothing capacitor 4, the output voltage Vout between the output terminals 11A and 11B and the current IQ detected by the current detector 6.

In the comparative example of the power supply unit 1, when the switching element 7 is pulse width modulation (PWM) driven for converting the voltage Vin between the terminals of the first smoothing capacitor 4 and outputting the converted voltage Vin as the output voltage Vout, a surge voltage may be generated every time the switching element 7 is turned off.

When the primary transformer winding 5A generates self-induced magnetic energy, the surge voltage is generated due to the interaction between leakage inductance of the primary transformer winding 5A and parasitic inductance of the switching element 7.

At this moment, if the snubber capacitor 81 has a sufficient capacity for absorbing the magnetic energy, the magnetic energy generated by the primary transformer winding 5A and the switching element 7 may be accumulated as electric energy in the snubber capacitor 81 inside the snubber circuit 8. As a result, the surge voltage may be lowered.

However, since the switching element 7 is configured to increase its switching speed, high surge voltage may be generated. Thus, a technique for lowering the surge voltage may increasingly be desired in the power supply unit.

FIG. 2A is a graph illustrating a simulation result of a drain voltage of the switching element 7 in the comparative example of the power supply unit 1, and FIG. 2B is a graph illustrating a simulation result of power consumption of the switching element 7 in the comparative example of the power supply unit 1.

FIGS. 2A and 2B illustrate the drain voltage and the power consumption for one switching cycle of the switching element 7. Further, the power consumption illustrated in FIG. 2B corresponds to the power consumption of the switching element 7 computed based on the drain voltage of the switching element 7 and the current IQ detected by the current detector 6.

In this example, the voltage Vin between the terminals of the first smoothing capacitor 4 is 48 V, the output voltage Vout is 12 V, the output current is 0.417 A, the switching frequency is 100 kHz, and the turns ratio of the primary transformer winding 5A to the secondary transformer winding 5B is 57_{:} 14.

Note that the simulation is carried out by constructing a circuit of the comparative example of the power supply unit 1 based on a simulation program with integrated circuit emphasis (SPICE) model.

When the switching element 7 is turned off at time t1, the drain voltage rapidly rises, thereby inducing the pulse of the surge voltage as indicated by a broken line circle illustrated in FIG. 2A. The value of the surge voltage indicated by an up down arrow in FIG. 2A is approximately 23 V, and the drain voltage is settled to approximately 100 V after the surge voltage has converged at time t2.

Further, the power consumption of the switching element 7 exhibits fluctuation down to approximately -14 W when the switching element 7 is turned off around time t1 as illustrated in FIG. 2B. However, the fluctuation may result from a noise component exaggerated by the simulation and the fluctuation toward a negative side may be far smaller in practice.

Having fluctuated towards the negative side, the power consumption of the switching element 7 is increased up to approximately 7 W. This fluctuation phenomenon is a turnoff loss of the switching element 7. After the surge voltage has converged at time t2, the power consumption of the switching element 7 is settled approximately to 0 W.

Further, when the switching element 7 is turned on at time 3, the drain voltage starts lowering, and subsequently reaches approximately 0 V at time t4. The power consumption of the switching element 7 rises approximately to 5 to 7 W at around time t4. This fluctuation phenomenon is a turnon loss of the switching element 7.

As described above, the turnoff loss occurs when the switching element 7 is turned off, and the turnon loss occurs when the switching element 7 is turned on.

Note that the power consumption (integral power value) for a whole switching cycle of the switching element 7 is 35 W in the comparative example of the power supply unit 1.

Accordingly, a significantly high surge voltage of 23 V is obtained corresponding to the drain voltage of 100 V in the comparative example of the power supply unit 1.

Further, a relatively high turnoff loss is obtained when the relatively high surge voltage is generated in the comparative example of the power supply unit 1. Thus, the switching element 7 may be damaged due to the high turnoff loss.

The power supply unit and the information processing apparatus according to the embodiments described below may include a countermeasure technique to prevent such turnoff loss resulting in the damage to the switching element 7. In the following, the power supply unit and the information processing apparatus according to the embodiments are described with the accompanying drawings.

### [EMBODIMENTS]

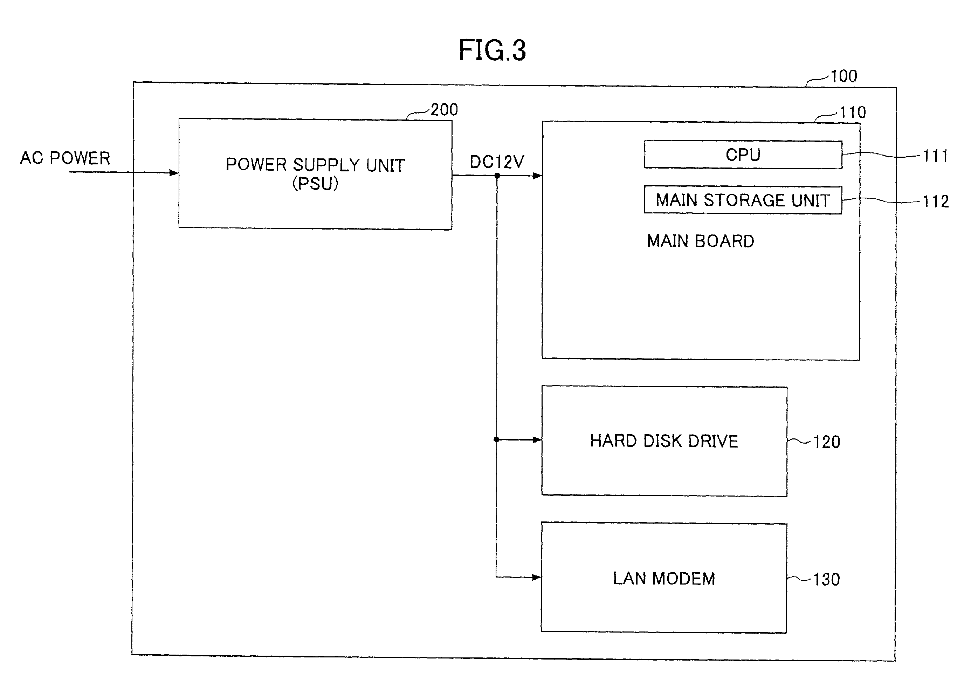

FIG. 3 is a block diagram illustrating an information processing apparatus including a power supply unit according to an embodiment.

In this embodiment, a server 100 serves as an example of the information processing apparatus.

The server 100 includes a power supply unit (PSU) 200 according to the embodiment, a main board 110, a hard disk drive 120, and a local area network (LAN) modem 130. FIG. 3 illustrates a configuration of the image processing apparatus (i.e., the server 100) that includes the main board 110, the hard disk drive 120 and the LAN modem 130 for purposes of illustration; however, the server 100 may include components in addition to the main board 110, the hard disk drive 120, and the LAN modem 130.

The main board 110 includes a central processing unit (CPU) 111 and a main storage unit 112 such as a random access memory (RAM) or a read only memory (ROM).

In the server 100, the power supply unit 200 is configured to supply power to the CPU 111 and the main storage unit 112 mounted on the main board 110, the hard disk drive 120 and the LAN modem 130. The power supply unit 200 is configured to convert alternating current (AC) power into direct current (DC) power while reducing the corresponding voltage, and output the converted DC power having the voltage of 12 V.

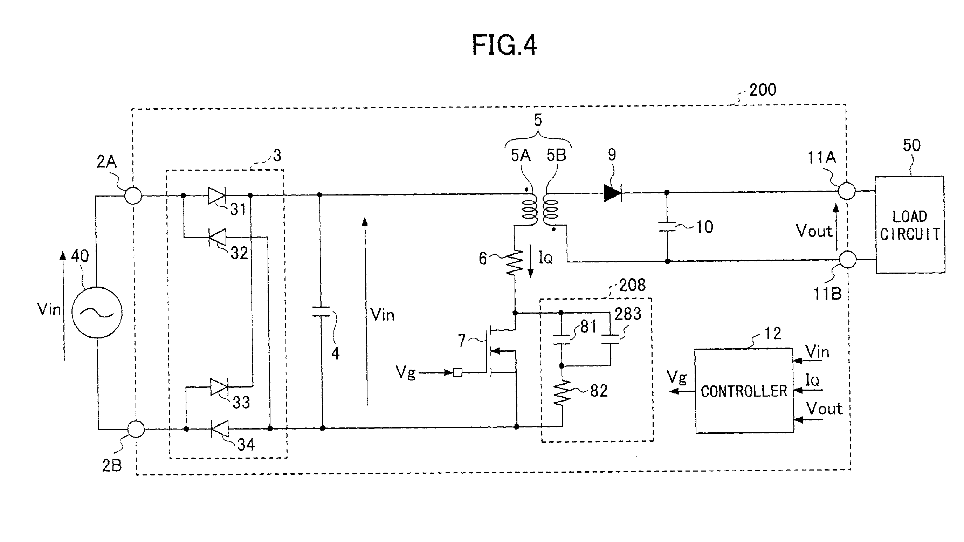

Next, the power supply unit 200 according to the embodiment is described with reference to FIG 4.

FIG. 4 is a circuit diagram illustrating the power supply unit 200 according to the embodiment. In FIG. 4, the same reference numerals are assigned to components identical to those of the comparative example of the power supply unit 1 (see FIG. 1), and the corresponding descriptions are appropriately omitted.

A load circuit 50 connected to the output terminals 11A and 11B of the power supply unit 200 according to the embodiment may be the CPU 111, the main storage unit 112, the hard disk drive 120 or the LAN modem 130. The power supply unit 200 according to the embodiment is configured to supply power to the load circuit 50 via the output terminals 11A and 11B.

Note that the power supply unit 200 according to the embodiment is a flyback power supply unit.

The power supply unit 200 according to the embodiment includes a snubber circuit 208 that largely differs from the snubber circuit 8 of the comparative example of the power supply unit 1. The snubber circuit 208 of the power supply unit 200 according to the embodiment further includes a snubber capacitor 283 in addition to the snubber capacitor 81 and the snubber resistor 82. Note that hereinafter, the snubber capacitor 81 is also refereed to as a first snubber capacitor and the snubber capacitor 283 is also referred to as a second snubber capacitor for purposes of illustration.

The second snubber capacitor 283 is connected parallel to the first snubber capacitor 81. That is, in the power supply unit 200 according to the embodiment, the snubber circuit 208 includes a parallel circuit formed of the first snubber capacitor 81 and the second snubber capacitor 283, and the snubber resistor 82 connected in series with the parallel circuit formed of the first snubber capacitor 81 and the second snubber capacitor 283. The snubber circuit 208 further includes the snubber capacitor 283 connected parallel to a series circuit (i.e., snubber circuit 8 in the comparative example, see FIG. 1) formed of the snubber capacitor 81 and the snubber resistor 82.

The capacitance of the second snubber capacitor 283 may be set to approximately 50 to 100% of the capacitance of the first snubber capacitor 81. In this embodiment, for example, the first snubber capacitor 81 may include the capacitance of of 1000 pF and the second snubber capacitor 283 may include the capacitance of 900 pF.

Further, the capacitance of the first snubber capacitor 81 is set such that the resonance frequency of the surge voltage of the power supply unit 200 having the snubber circuit 208 connected parallel to the switching element 7 excluding the second snubber capacitor 283 is half the value of the resonance frequency of the surge voltage of the power supply unit 200 excluding the snubber capacitors 81 and 283.

Note that it is preferable that the capacitance of the second snubber capacitor 283 be equal to or smaller than the capacitance of the first snubber capacitor 81. If the capacitance of the snubber capacitor 283 is larger than the capacitance of the first snubber capacitor 81, the second snubber capacitor 283 may accumulate more energy than the energy accumulated by the first snubber capacitor 81, the capacitance of which is set as described above. This configuration may result in damage to the switching element 7.

Further, the snubber resistor 82 may include a suitable resistance value for optimizing transient responses to the voltage value and the current value of the switching element 7 when the switching element 7 is turned on or off.

In addition, in the power supply unit 200 according to the embodiment, the switching element 7 may be formed of a gallium nitride (GaN) high electron mobility transistor (GaN-HEMT). The high electron mobility transistor (HEMT) made of GaN (gallium nitride) may exhibit a higher speed operation and a lower on-resistance compared to the silicon MOSFET. The GaN-HEMT may perform high-speed switching operations of the order of 10 MHz. By contrast, the silicon MOSFET may not be able to carry out high-speed switching operations of the order of 10 MHz.

Since the increase of the switching frequency may increase the surge voltage, effectively lowering the surge voltage may be an important factor for constructing the power supply unit.

Further, the controller 12 of the power supply unit 200 according to the embodiment determines the duty ratio of the gate voltage based on the voltage Vin between the terminals of the first smoothing capacitor 4, the output voltage Vout between the output terminals 11A and 11B and the current IQ flowing through the switching element 7, and applies a voltage to the gate of the switching element 7 based on the determined duty ratio. The controller 12 may be formed of a multiplier circuit that may be capable of computing the duty ratio base on the current IQ and the voltage values Vout and Vin.

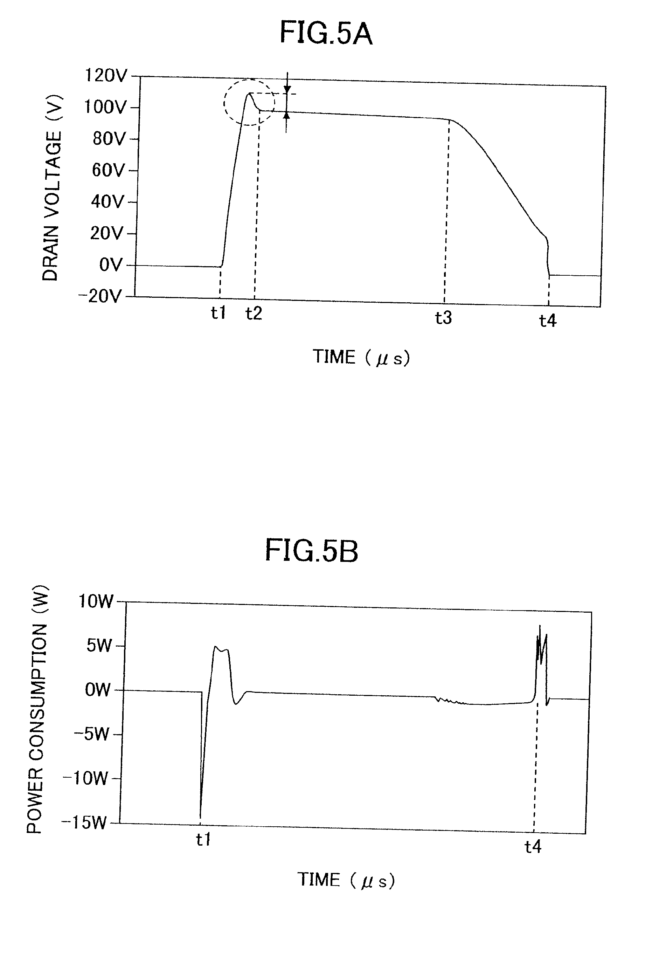

Next, the surge voltage and the power consumption of the power supply unit 200 according to the embodiment is described with reference to FIGS. 5A and 5B.

FIG. 5A is a graph illustrating a simulation result of a drain voltage of the switching element 7 in the power supply unit 200 according to the embodiment, and FIG. 5B is a graph illustrating a simulation result of power consumption of the switching element 7 in the power supply unit according to the embodiment.

FIGS. 5A and 5B illustrate the drain voltage and the power consumption for one switching cycle of the switching element 7. Further, the power consumption illustrated in FIG. 5B corresponds to the power consumption of the switching element 7 that is computed based on the drain voltage of the switching element 7 and the current IQ detected by the current detector 6.

In this example, the voltage Vin between the terminals of the first smoothing capacitor 4 is 48 V, the output voltage Vout is 12 V, the output current is 0.417 A, the switching frequency is 100 kHz, and the turns ratio of the primary transformer winding 5A to the secondary transformer winding 5B is 57_{:} 14.

Note that the simulation is carried out by constructing a circuit of the comparative example of the power supply device 1 based on a simulation program with integrated circuit emphasis (SPICE) model.

Further, the simulation results illustrated in FIGS. 5A and 5B are obtained by utilizing the silicon MOFSET as the switching element 7.

When the switching element 7 is turned off at time t1, the drain voltage rapidly rises; however, the pulse of the surge voltage indicated by a broken line circle illustrated in FIG. 5A is lowered compared to the pulse of the surge voltage (see FIG. 2A) obtained in the comparative example of the power supply unit 1.

The value of the surge voltage indicated by up and down arrows in FIG. 5A is approximately 8 V, and the drain voltage is settled to approximately 100 V after the surge voltage has converged at time t2.

Further, the power consumption of the switching element 7 exhibits fluctuation down to approximately -14 W when the switching element 7 is turned off around time t1 as illustrated in FIG. 2B. However, the fluctuation may result from a noise component exaggerated by the simulation, and hence, the fluctuation toward a negative side may be far smaller in practice.

Having fluctuated toward the negative side, the power consumption of the switching element 7 is increased up to approximately 5 W. This fluctuation phenomenon is a turnoff loss of the switching element 7. After the surge voltage has converged at time t2, the power consumption of the switching element 7 is settled approximately to 0 W.

Further, when the switching element 7 is turned on at time 3, the drain voltage starts lowering, and subsequently reaches approximately 0 V at time t4. The power consumption of the switching element 7 rises approximately to 5 up to 7 W at around time t4. This fluctuation phenomenon is a turnon loss of the switching element 7.

Note that the power consumption (integral power value) for the whole switching cycle of the switching element 7 is 35. 5 W in the power supply device 200 according to the embodiment, which appears approximately the same as the power consumption (integral power value) for the whole switching cycle of the switching element 7 obtained in the comparative example of the power supply unit 1. However, the turnoff loss obtained in the power supply device 200 according to the embodiment is approximately 5 W, which is lower than the turnoff loss obtained in the comparative example of the power supply device 1.

Thus, the results illustrate that the surge voltage of the power supply unit 200 according to the embodiment is reduced down to approximately 1/3 of the surge voltage of the comparative example of the power supply unit 1, while approximately the same power consumption for the whole switching cycle of the switching element 7 is obtained both in the power supply unit 200 according to the embodiment and the comparative example of the power supply unit 1. In addition, the turnoff loss obtained in the power supply unit 200 according to the embodiment is lower than the turnoff loss obtained in the comparative example of the power supply unit 1.

Note that the surge voltage of the power supply unit 200 according to the embodiment may be lowered due to adding of the second snubber capacitor 283 in the power supply unit 200 according to the embodiment. That is, the magnetic energy accumulated in the primary transformer winding 5A and the switching element 7 may be effectively absorbed as electric energy by the snubber capacitors 81 and 283 when the switching element 7 is turned off.

Further, as may be clear from the comparison between the FIGS. 5B and 2B, the turnoff loss obtained in the power supply unit 200 according to the embodiment is lowered compared to the turnoff loss obtained in the comparative example of the power supply unit 1. Thus, damage to the switching element 7 may be suppressed in the power supply unit 200 according to the embodiment. The turnoff loss obtained in the power supply unit 200 according to the embodiment may be lowered, because the surge voltage in the power supply unit 200 according to the embodiment is lowered compared to the surge voltage in the comparative example of the power supply unit 1.

In addition, when the switching frequency of the switching element 7 is increased, the peak inverse voltage of the switching element 7 may be generally lowered. The lower turnoff loss may be advantageous to the power supply unit 200 according to the embodiment when the power supply unit 200 according to the embodiment employs the switching element 7 for performing higher frequency switching similar to the GaN-HEMT serving as the switching element 7.

Further, the power supply unit 200 according to the embodiment is formed by simply adding an additional snubber capacitor (i.e., second snubber capacitor 283) to the comparative example of the power supply unit 1. Although the power supply unit 200 according to the embodiment includes this additional snubber capacitor, the snubber circuit 208 still includes the number of circuit components far less than the number of circuit components the related art power supply unit has.

As described above, the surge voltage and the power consumption may be advantageously lowered in the power supply unit 200 according to the embodiment.

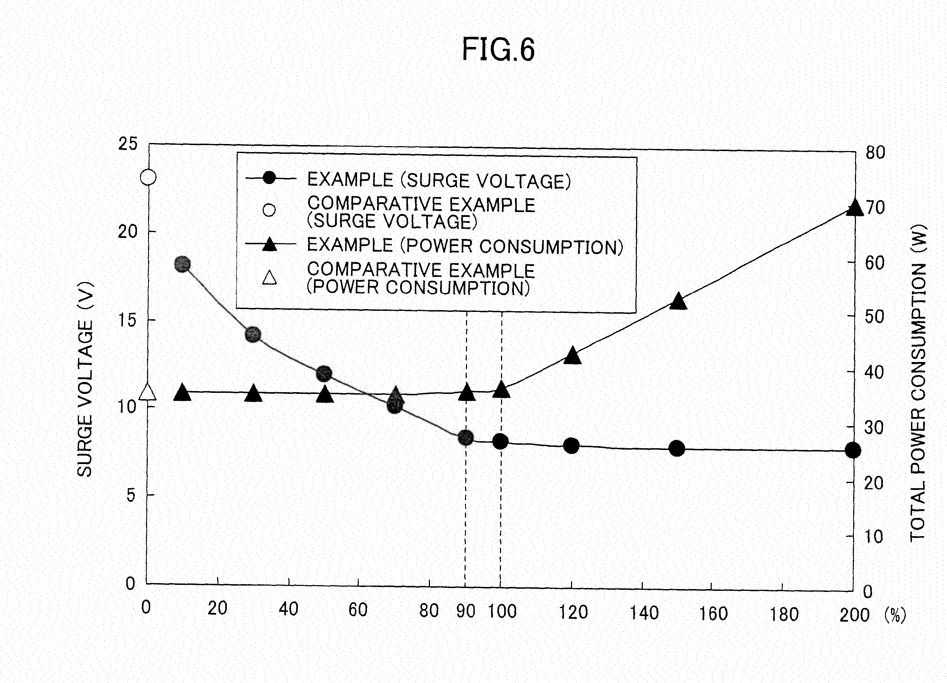

Next, simulation results of the surge voltage and the power consumption obtained in the power supply unit 200 according to the embodiment and the comparative example of the power supply unit 1 are described with reference to FIG. 6.

FIG. 6 is a characteristic graph illustrating the simulation results of the surge voltage (maximum value) and the power consumption (integral value for whole switching cycle) of the switching element 1 obtained in the power supply unit 200 according to the embodiment and the comparative example of the power supply unit1.

Note that the simulation results illustrated in FIG. 6 are obtained by utilizing the silicon MOFSET as the switching element 7 in the power supply unit 200 according to the embodiment.

Nine simulation results on the power supply unit 200 according to the embodiment are obtained under the corresponding conditions in which the capacitance of the second snubber capacitor 283 is 100 pF, 300 pF, 500 pF, 700 pF, 900 pF, 1000 pF, 1200 pF, 1500 pF and 2000 pF. In FIG. 6, the horizontal axis of the graph indicates the ratio (C2/C1) of the capacitance C2 of the second snubber capacitor 283 to the capacitance C1 of the first snubber capacitor 81, which is expressed as percentage (%) , whereas the left vertical axis indicates the surge voltage V and the right vertical axis indicates the power consumption W.

Note that the surge voltage and the power consumption obtained in the comparative example of the power supply device 1 are indicated at positions of 0% of the horizontal axis.

The simulation results illustrate that the comparative example of the power supply device 1 has exhibited the surge voltage of 23 V and the power consumption of 35 W.

Further, the simulation results illustrate that the power supply device 200 according to the embodiment has exhibited the surge voltage of 8 V and the power consumption of 35.5 W when the capacitance of the second snubber capacitor 283 is 900 pF.

According to the simulation results, when the capacitance of the second snubber capacitor 283 is lower than 900 pF, the surge voltage tends to rise. That is, when the capacitance of the second snubber capacitor 283 is 700 pF, the surge voltage is approximately 10 V; when the capacitance of the second snubber capacitor 283 is 500 pF, the surge voltage is approximately 12 V; when the capacitance of the second snubber capacitor 283 is 300 pF, the surge voltage is approximately 14 V; and when the capacitance of the second snubber capacitor 283 is 100 pF, the surge voltage is approximately 18 V.

By contrast, when the capacitance of the second snubber capacitor 283 is higher than 900 pF, the surge voltage tends to slightly decrease, and the surge voltage of 8 V or less is obtained accordingly.

Further, the power consumption tends to slightly decrease when the capacitance of the second snubber capacitor 283 is lower than 900 pF.

When the capacitance of the second snubber capacitor 283 is higher than 900 pF, approximately constant power consumption is obtained up to the capacitance of 1000 pF. However, the power consumption tends to rapidly rise once the capacitance of the second snubber capacitor 283 exceeds 1000 pF.

Thus, it is preferable that the capacitance of the second snubber capacitor 283 be 500 pF or higher and 1000 pF or lower in the power supply unit according to the embodiment. When the capacitance of the second snubber capacitor 283 falls within a range of 500 pF to 1000 pF, the surge voltage of approximately 12 V may be obtained. Accordingly, the surge voltage may be significantly lowered in the power supply device 200 according to the embodiment compared to the surge voltage obtained in the comparative example of the power supply unit 1. In addition, the power consumption obtained is approximately 35 W, which is similar to the power consumption obtained in the comparative example of the power supply unit 1.

Further, it is more preferable that the capacitance of the second snubber capacitor 283 be 900 pF or higher and 1000 pF or lower. When the capacitance of the second snubber capacitor 283 falls within a range of 900pF to 1000 pF, the surge voltage may be lowered to approximately 8 V and the power consumption obtained in the switching element 7 of the power supply device 200 according to the embodiment may be approximately 35 W. Accordingly, the power consumption of the power supply device 200 according to the embodiment is lowered similar to the power consumption of the comparative example of the power supply unit 1.

Further, as illustrated in FIG. 5B, the turnoff loss of the switching element 7 in the power supply unit according to the embodiment is lowered compared to the turnoff loss of the switching element 7 in the comparative example of the power supply unit 1. This indicates that damage to the switching element 7 may be suppressed in the power supply unit 200 according to the embodiment.

In the power supply unit 200 according to the embodiment, the snubber circuit 208, which includes a parallel circuit composed of the first snubber capacitor 81 and the second snubber capacitor 283, and the snubber resistor 82 connected to the parallel circuit in series, is connected parallel to the switching element 7. With this configuration, the surge voltage may be effectively lowered.

For example, when the ratio (C2/C1) of the capacitance C2 of the second snubber capacitor 283 to the capacitance C1 of the first snubber capacitor 81 is set to 50 to 100% in the power supply unit 200 according to the embodiment, the surge voltage may be lowered to approximately 1/3 of the surge voltage of the comparative example of the power supply unit 1. In addition, when the capacitance ratio (C2/C1) is set to 90 to 100%, the surge voltage may be further lowered.

Further, since the turnoff loss obtained in the power supply unit 200 according to the embodiment is lowered, damage to the switching element 7 may be suppressed.

Further, the power supply unit 200 according to the embodiment includes a simple circuit configuration in which the snubber circuit 208 includes a parallel circuit formed of the first snubber capacitor 81 and the second snubber capacitor 283, and the snubber resistor 82 connected in series with the parallel circuit formed of the first snubber capacitor 81 and the second snubber capacitor 283. The snubber circuit 208 is connected parallel to the switching element 7.

Thus, since the snubber circuit 208 includes the second snubber capacitor 283 additionally connected parallel to the snubber capacitor (i.e., first snubber capacitor of the embodiment) 81 of the snubber circuit 8 in the comparative example (see FIG. 1), the snubber circuit 208 in the power supply unit 200 according to the embodiment includes a simpler circuit configuration having fewer number circuit components. Since the power supply unit 200 according to the embodiment includes the snubber circuit 208 having such a simpler circuit configuration, the power consumption in the whole circuit may be reduced.

Further, in the power supply unit 200 according to the embodiment, since a primary side circuit including the input terminals 2A and 2B, the primary transformer winding 5A, the snubber circuit 208 and the like does not include a rectifier element within the snubber circuit 208, the power consumption may be lowered.

Further, since the primary side circuit does not include the rectifier element within the snubber circuit 208 and the snubber circuit 208 includes fewer number circuit components, the power supply unit 200 according to the embodiment may be reduced in size.

Note that the power supply unit 200 according to the embodiment illustrated above is a flyback power supply unit. However, the power supply unit 200 according to the embodiment may be a forward power supply unit or push-pull power supply unit.

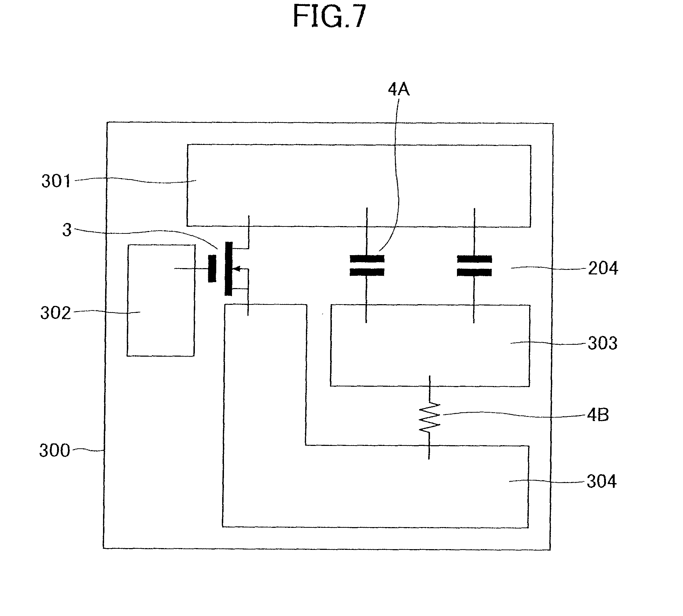

Moreover, the first snubber capacitor 81, the snubber resistor 82 and the second snubber capacitor 283 within the snubber circuit 208 may be modularized as illustrated in FIG. 7.

FIG. 7 is a plan diagram illustrating modification of the power supply unit 200 according to the embodiment on which the switching element 7, the first snubber capacitor 81, the snubber resistor 82 and the second snubber capacitor 283 are implemented.

A circuit board 300 in FIG. 7 may be a glass epoxy substrate formed by adhering copper foil to a flame-retardant type 4 (FR4) substrate.

As illustrated in FIG. 7, the circuit board 300 includes copper foil patterns 301, 302, 303 and 304.

The first snubber capacitor 81, the snubber resistor 82 and the second snubber capacitor 283 within the snubber circuit 208 (see FIG. 4) may be fixed with gold ball bumps to the respective copper foil patterns 301, 302, 303 and 304.

Note that the modularization of the switching element 7, the first snubber capacitor 81, the snubber resistor 82 and the second snubber capacitor 283 indicates implementing the switching element 7, the first snubber capacitor 81, the snubber resistor 82 and the second snubber capacitor 283 on interconnects (i.e., copper foil patterns 301 to 304) formed on the same substrate (i.e., substrate 300) via the bumps or the like.

The modularization of the switching element 7, the first snubber capacitor 81, the snubber resistor 82 and the second snubber capacitor 283 may make it possible to cause lengths of connecting portions (i.e., bumps) for connecting the switching element 7, the first snubber capacitor 81, the snubber resistor 82 and the second snubber capacitor 283 conform to the respective copper foil patterns 301 to 304. Accordingly, parasitic inductance formed in the connecting portions (i.e., bumps) may be reduced.

In addition, if the parasitic inductance formed in the connecting portions (i.e., bumps) is reduced by the modularization of the switching element 7, the first snubber capacitor 81, the snubber resistor 82 and the second snubber capacitor 283, the capacitance of the first snubber capacitor 81 and the capacitance of the second snubber capacitor 283 may be reduced. Thus, the power consumption may be further reduced, and the power supply unit 200 according to the embodiment may further be reduced in size, owing to the modularization of the switching element 7, the first snubber capacitor 81, the snubber resistor 82 and the second snubber capacitor 283.

In the power supply unit according to the embodiment and modification of the embodiment, the surge voltage may be effectively reduced.

So far, the preferred embodiments and modification of the power supply unit and the information processing apparatus are described. However, the invention is not limited to those specifically described embodiments and the modification thereof, and various modifications and alteration may be made within the scope of the inventions described in the claims.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention.

Although the embodiments of the present invention have been described in detail, it should be understood that the various changes, substitutions, and alterations could be made hereto without departing from the spirit and scope of the invention.

## Claims

1. A power supply unit comprising:
input terminals to which alternating current power is supplied;
a rectifier circuit configured to rectify the alternating current power supplied from the input terminals;
a capacitor configured to smooth the alternating current power rectified by the rectifier circuit;
a primary transformer winding and a switching element connected in series between first and second terminals of the capacitor;
a secondary transformer winding coupled to the primary transformer winding;
output terminals connected to the secondary transformer winding; and
a snubber circuit connected parallel to the switching element, **characterized in that**
the snubber circuit includes a parallel circuit having a first capacitor and a second capacitor connected in parallel, and a resistor connected in series with the parallel circuit.

2. The power supply unit as claimed in claim 1, **characterized in that**
capacitance of the second capacitor is equal to or lower than capacitance of the first capacitor.

3. The power supply unit as claimed in claim 1 or 2, **characterized in that**
the capacitance of the second capacitor is 90 to 100% of the capacitance of the first capacitor.

4. The power supply unit as claimed in any one of claims 1 to 3, **characterized in that**
the switching element, the first and the second capacitors and the resistor of the snubber circuit are modularized.

5. An information processing apparatus comprising:
the power supply unit as claimed in any one of claims 1 to 4;
a processor; and
a storage unit, **characterized in that**
the processor and the storage unit are supplied with power via the power supply unit.
